# EUROPEAN PATENT SPECIFICATION

(11) **EP 2 928 000 B1**
(45) Date of publication and mention of the grant of the patent: **16.05.2018**
(21) Application number: 15160057.4
(22) Date of filing: 20.03.2015
(51) Int. Cl.: H01M 8/02, H01M 4/88, H01M 8/00, H01M 8/0232, H01M 8/0206, H01M 8/1246, H01M 4/86, H01M 8/04082, H01M 8/1231, H01M 8/124

(54) **Interconnector and solid oxide fuel cell device**
INTERKONNEKTOR UND VORRICHTUNG EINER FESTOXID-BRENNSTOFFZELLE
INTERCONNECTEUR ET DISPOSITIF DE PILE À COMBUSTIBLE À OXYDE SOLIDE

(30) Priority: 01.04.2014 US 201414242492
(43) Date of publication of application: 07.10.2015
(73) Proprietor: General Electric Company, Schenectady, NY 12345 (US)
(72) Inventor: Striker, Todd Michael, Niskayuna, 12309 (US); Kost, John, Niskayuna, 12309 (US); Alinger, Matthew Joseph, Niskayuna, 12309 (US); Gaunt, Simon William, Niskauna, 12309 (US)
(74) Representative: Bedford, Grant Richard

(56) References cited:
- WO-A2-2007/044045
- US-A1- 2003 194 592
- MALZBENDER J ET AL: "Component interactions after long-term operation of an SOFC stack with LSM cathode", JOURNAL OF POWER SOURCES, ELSEVIER SA, CH, vol. 201, 31 October 2011 (2011-10-31), pages 196-203, XP028341607, ISSN: 0378-7753, DOI: 10.1016/J.JPOWSOUR.2011.10.117 [retrieved on 2011-11-06]

## Description

The subject matter of this disclosure relates generally to electrochemical devices such as solid oxide fuel cells, and more particularly, to a solid oxide fuel cell (SOFC) metallic manifold and interconnect structure that provides a dense surface adjacent to a permeable surface with a flat transition perpendicular to the interfacial junction of the surfaces so that both surfaces are in the same plane. Subsequent electrode and electrolyte layers are deposited onto the surface, so that they are parallel to the planar interconnect surface.
A solid oxide fuel cell (SOFC) converts chemical energy to electrical energy with high efficiency and low emissions. A cathode reduces oxygen on one side and supplies oxygen ions to a hermetic electrolyte. The hermetic electrolyte conducts the oxygen ions at high temperature to an anode, where the oxygen ions oxidize hydrogen to form water. A resistive load connecting the anode and cathode conducts electrons to perform work.
Various known SOFC's are described, for example, in US 2003/0194592 and WO 2007/ 044045.
Anode-supported SOFCs based on traditional ceramic sintering technology are limited by the maximum manufacturable cell size at high yields; and sinter-based manufacturing facilities require large capital investment. However, metal interconnect-supported SOFCs utilizing thermal spray deposition offer a variety of manufacturing benefits as well as a more rugged design. As a result, cell sizes can be increased with more success than observed when using sintering manufacturing. The success of thermal spray deposited electrolytes is not only dependent on the intrinsic coating hermeticity, but also the design of the interconnect substrate.
The interconnect surface needs to be relatively smooth to prevent gross defects from forming as electrode, typically, although not exclusively, anode, and the subsequent electrolyte are deposited, which can result in low open circuit voltage (OCV) and poor performance at high fuel utilization (U_{f}). In addition, the interconnect needs to have a fuel flow field designed to allow sufficient fuel gas to reach the anode and electrolyte interface to minimize mass transport polarization. Typically this is achieved by using large perforations or interconnected porosity. Powder feedstock that is fed into the thermal spray process can range from 100 nm to around 50 µm for thermal spray deposition, restricting the interconnect fuel flow field to less than about 100 µm porous feature sizes. Porous feature sizes less than about twice the powder size is typically adequate to deposit a complete and uniform coating, where anode and electrolyte powder can adequately bridge the features without the formation of permeable defects. The use of a porous metal foam has shown promise for providing adequate fuel to reach the anode and electrolyte interface, while still maintaining a hermetic electrolyte coating without crack causing defects. However, known designs that require the porous metal to be sealed to a dense metal manifold result in sharp transitional corners and seams that prevent full electrolyte coverage and cause localized areas of high stress concentrations after electrolyte deposition. The stress substantially increases the probability of cracking during operation, leading to the loss of OCV and U_{f} and can ultimately cause SOFC failure.

Since a SOFC flow field carries fuel gas or air to the electrodes for electrochemical reactions, the gas and air flow fields, in conjunction with their respective manifolds must be separated and sealed to prevent fuel and air mixing. Further, the gas and air flow fields must also be electrically insulated while providing electrical interconnections, conducting electrons from their respective anode or cathode electrodes.

The manifold and flow field must provide pathways for the reactant gas to reach the electrodes. This is typically achieved using perforated, channeled, or corrugated designs. These designs do not offer a substantially smooth and flat substrate for planar coating deposition. Thermal spray deposition techniques, for example, require smooth surfaces for uniform coatings, without sharp features that can cause large local stresses leading to cracks. These qualities are desired to ensure electrolyte coating hermeticity. The electrolyte not only needs to be intrinsically hermetic, but must also form a seal to the dense portion of the manifold.

One known method deposits an electrolyte over an anode with direct bonding to the anode interconnect. This results in a seal between the electrolyte and the anode interconnect only when the electrolyte is sufficiently hermetic, eliminating fluid communication between the fuel and the oxidant (typically air). A monolithic manifold has been proposed with large perforated holes for fluid communication with the electrode and electrolyte. Since the part is monolithic, the bonding of a permeable interconnect to the manifold is not needed. However, to address the challenge of depositing thin anode and electrolyte layers over large fuel openings, the concept suggests using an expendable fugitive material in the interconnect fuel openings. This step requires a high temperature burnout and can interfere or have limited success with high temperature electrolyte deposition processes such as thermal spray deposition.

Similarly, some techniques have co-sintered metal interconnect structures with electrolyte, where the electrolyte is in contact with and forms a seal over the junction of porous and dense regions. The sealed interface requires electrolyte only to be in contact with the porous and dense interface, leaving a discontinuous and incomplete anode electrode coverage. The incomplete anode coverage and co-sintering of metal, cermet and ceramic can disadvantageously create substantial residual stresses in coating and is not desirable.

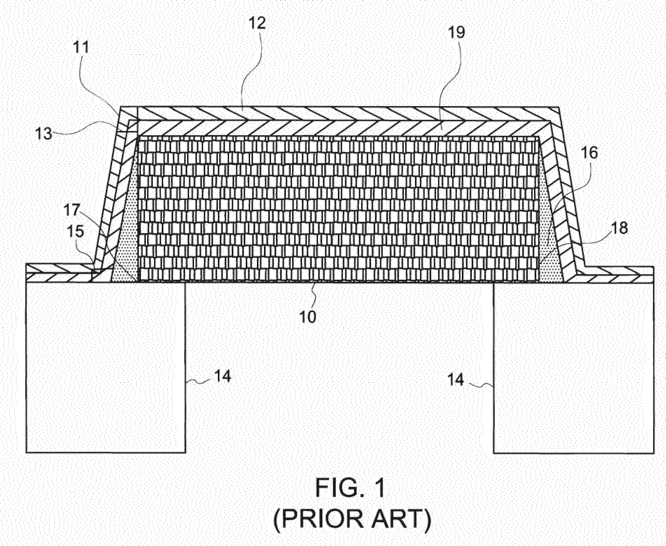

Another technique that has been used to provide manifold fluid contact to the electrodes uses a microporous porous metal. Porous metal with pore sizes less than about 100 microns have been adequate for providing complete anode coverage with low roughness values. Subsequent electrolyte deposition has been shown to be without discontinuities and stress related cracking. However, the perimeter of the porous metal, where in contact with the dense portion of the manifold, is a critical location that can cause defective coatings. Laser welding has been used to attach planar metallic porous metal to the dense manifold for thermal spray applications. Anode deposition was followed by the deposition of electrolyte, which formed a hermetic seal to the dense metal. The laser welding technique resulted in sharp corners that were undesirable, leading to high local stresses and often resulted in catastrophic electrolyte cracks adjacent to the permeable interconnect. Figure 1 is a schematic of a porous metal laser welded to the dense manifold metal. Electrolyte cracks result in fuel and air interdiffusion, leading to lower OCV and U_{f}.

In view of the foregoing, a need exists for a metal interconnect-supported electrochemical device that further minimizes any chance for the formation of defects that may adversely affect the open circuit voltage and/or fuel utilization.

According to the present invention, a solid oxide fuel cell (SOFC) as defined by the claims is provided.

Large metal supported and thermally sprayed electrode and electrolyte require coatings without regions with residual stress that can cause crack propagation. Therefore, it is beneficial to entirely coat a metal interconnected substrate face with a uniformly thick electrode. Full electrode coverage provides a low modulus interface between the metal and electrolyte, allowing for some compliance and a lower stress state in the electrolyte coating.

The success of the seal created by the interconnect junction between dense/hermetic manifold and the permeable material relies on the dense portion that is impermeable to the fuel gas that is adjacent to a porous region created by the permeable material. The porous region allows for the reducing gas to reach the anode and electrolyte interface. In addition, the surface of the interconnect junction is smooth and seamless, providing an ideal substrate for deposition of thin electrode and electrolyte layers and minimizing the chance for defects to form.

Various features, aspects, and advantages of the present invention will become better understood when the following detailed description is read with reference to the accompanying drawings, wherein:
Figure 1 is a schematic illustrating porous metal attached to a dense metallic manifold using laser welding, and that is known in the SOFC art;
Figure 2 is a schematic illustrating a side cross-sectional view of a monolithic manifold comprising a permeable metal structure for an interconnect supported SOFC, according to one embodiment;
Figure 3 is a schematic illustrating a top view of a monolithic manifold with a plurality of tiled permeable/porous metallic structures, according to one embodiment; and
Figure 4 is a schematic illustrating a side view of a monolithic manifold with a plurality of tiled permeable/porous metallic structures, according to one embodiment.

While the above-identified drawing figures set forth particular embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope of the claims.

Looking again at Figure 1, a schematic illustrates a cross-section view of a known porous metal structure 10 attached to a dense metallic manifold 14 and that provides manifold fluid contact to associated SOFC electrode and electrolyte layers 19, 12. The resultant manifold structure employs laser welds 16 to attach the porous metal 10 at its perimeter 18 to the dense metallic manifold 14. The perimeter 18 of the porous metal structure 10, where in contact with the dense metallic manifold 14, is a critical location that can undesirably create defective coatings due to the laser welding technique causing sharp corners 11 and discontinuities, resulting in localized stress points leading to catastrophic electrolyte cracks 13, 15 adjacent to the permeable interconnect 17.

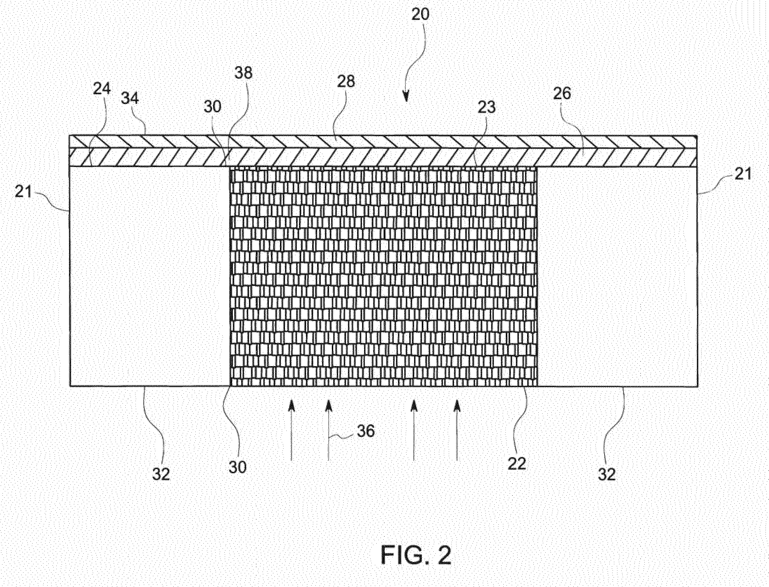

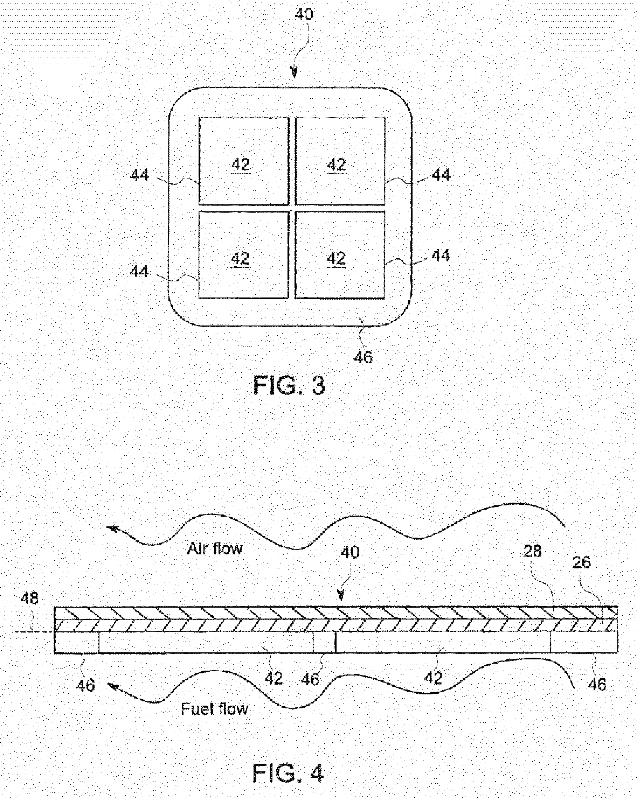

Figure 2 is a schematic illustrating a side cross-sectional view of a monolithic manifold structure 20 with a permeable/porous metallic structure 22, according to one embodiment, that avoids the shortcomings of the manifold structure described herein with reference to Figure 1. The planar concepts described herein advantageously enable formation of a one or more large area metal supported SOFC in which at least one may have dimensions, including without limitation, diameters, lengths, and/or widths, equal to or greater than 60 cm (24 inches). The principles described herein provide advantages associated with thermal spraying coatings onto metal supported substrates beyond advantages associated with traditional ceramic/metallurgical sintering techniques and structures. According to one aspect, thermal spraying coatings onto metal supported substrates results in metal that is more robust, allowing formation of larger size cells and/or higher production yields. Cell sizes as large as 24 inches square can be easily formed using the principles described herein, wherein traditional ceramic/metallurgical sintering such large cell sizes would be extremely difficult to construct without breaking the ceramic. Tiling, described herein with reference to Figures 3 and 4, may allow formation of yet larger cell sizes.

With continued reference to Figure 2, a manifold and interconnect support surface 24 is substantially flat and provides an ideal substrate for thermal spray deposition and full coverage of an electrode such as an anode 26 and an electrolyte 28 without stress related cracking or defects related to discontinuities such as those with reference to and depicted in Figure 1. The monolithic manifold structure 20 comprises a dense metallic structure 32 that abuts the permeable metallic structure 22 to form an interconnect junction 30 that provides a substantially seamless transition between the dense metallic structure 32 and the permeable metallic structure 22 for an interconnect supported electrochemical device such as an SOFC. According to one aspect, the interconnect junction 30 causes a continuous transition from dense to porous surface that is less than 10 degrees from the dense metallic surface plane. According to another embodiment, the interconnect junction 30 is flat so that the porous surface lies in the same plane as the dense surface.

According to one embodiment, the dense metallic structure 32 is continuous and completely encircles the permeable metallic structure 22 such that only a single interconnect junction 30 exists between the dense metallic structure 32 and the permeable metallic structure 22. Other embodiments may comprise a plurality of porous areas/permeable metallic structures tiled within a dense metallic structure to form a plurality of interconnect junctions, based on a particular application.

Figure 3 is a top view illustrating one embodiment of a monolithic manifold structure 40 with a plurality of tiled permeable/porous metallic structures 42 to yield a plurality of substantially planar junctions 44 between the permeable/porous metallic structures 42 and a dense metallic structure 46.

Figure 4 is a side view of the monolithic manifold structure 40 showing the outer surfaces of the permeable/porous metallic structures 42 that are in contact with the anode layer 26 lay within a common plane 48. The electrolyte layer 28 seals the anode layer 26, as stated herein.

Looking again at Figure 2, the electrode/anode layer 26 according to one aspect is deposited using a thermal spray technique directly onto the manifold support surface 24 over the interconnect junction 30 to fully cover the metallic interconnect. A deposited electrolyte 28 is intrinsically hermetic and fully covers the electrode layer 26.

The success of the seal 34 relies on a dense portion 32 that is impermeable to a fuel gas 36 and that is adjacent to the porous region 22. The porous region 22 allows for the fuel 36 to reach the anode 26 and electrolyte 28 interface. In addition, the surface 38 of the interconnect junction 30 is smooth and seamless, providing an ideal substrate for deposition of the thin electrode 26 and electrolyte 28 layers and minimizing the chance for defects to form.

Further, the anode deposited over the porous interconnect support surface is exposed to fuel during SOFC operation. According to one embodiment, the SOFC anode comprises nickel and a yttria-stabilized zirconia cermet. During operation, the anode nickel exposed to the fuel remains reduced, while the anode nickel close to the perimeter of the cell is oxidized to nickel oxide. The oxidized portion is substantially dense and impermeable to further seal fuel from air.
The interconnect surface 38 is relatively smooth to prevent gross defects from forming as the anode 26 and electrolyte 28 are deposited, which can result in low open circuit voltage (OCV) and poor performance and fuel utilization (U_{f}), as stated herein. Further, the interconnect has a fuel flow field designed to allow sufficient fuel gas to reach the anode 26 and electrolyte 28 interface. Typically this is achieved by using large perforations or interconnected porosity. Powder feedstock can range from 100 nm to around 100 µm for thermal spray deposition. Preferred embodiments use a feedstock with maximum average particle size less than 50 µm, restricting the interconnect fuel flow field to less than about 100 µm porous feature sizes. Feature sizes smaller than the powder particle size are desired so that anode and electrolyte powder can adequately bridge the features without the formation of permeable defects, as stated herein. The use of a porous metal has shown promise for providing adequate fuel to reach the anode and electrolyte interface, while still maintaining a hermetic electrolyte coating without crack causing defects. Less than 25 µm porous features are employed according to a preferred embodiment.
Previous designs that require the porous metal support to be sealed to a dense metal manifold result in sharp transitional corners and seams that prevent full electrolyte coverage and cause localized areas of high stress concentrations after electrolyte deposition. The stress substantially increases the probability of cracking after deposition, leading to the loss of OCV and U_{f} and can ultimately cause SOFC failure.
In summary explanation, an electrochemical device such as a solid oxide fuel cell (SOFC) manifold and interconnect structure 20 provides a substantially planar dense surface adjacent to a substantially planar permeable surface with a smooth/gradual transition at the junction 30 between the surfaces to avoid the discontinuities and sharp corners generally associated with known anode supported SOFC manifold and interconnect structures. More specifically, the electrochemical device/SOFC manifold and interconnect structure 20 comprises a dense and hermetic structure 32 comprising a first planar surface 21, a permeable material 22 comprising a second planar surface 23 in lateral contact with the first planar surface 21 to form a first electrode interconnect. An interconnect junction 30 between the first and second planar surfaces 21, 23 comprises an exposed planar surface 38 that is substantially flat and devoid of discontinuities, corners and seams. A first electrode material 26 is deposited on and fully covers the exposed planar surface 38 of the interconnect junction 30, the permeable material 22, and the manifold support surface 24. An electrolyte 28 is deposited on and fully covers the first electrode material 26. Further, the electrolyte 28 substantially seals the first electrode material 26 and provides a fluid barrier between oxidant and fuel gases 36 associated with the electrochemical device/SOFC. The electrochemical device/SOFC may further comprise a second electrode material deposited onto the electrolyte 28 to form a second electrode, and a second electrode interconnect in fluid contact with the second electrode.

According to a preferred embodiment, the first electrode comprises, but is not limited to, an anode nickel and yttria-stabilized zirconia cermet. The anode material can also be chosen from doped cerium oxides, including gadolinium and samarium doped ceria; lanthanum-based perovskite oxides; stabilized zirconia; nickel or cobalt; strontium titanate and doped-strontium titanate; and mixtures thereof. It can be appreciated that alternatively, a cathode can be deposited first onto the interconnect material to coat over the interfacial junction of the dense and porous interconnect surface. The electrolyte would then subsequently be deposited, followed by the anode.

According to one aspect, a thermal spray technique is used to apply an electrode, preferably anode, and a subsequent electrolyte. "Thermal spray technique", as used herein, shall mean a coating process in which melted or heated materials are sprayed onto a surface. The feedstock, i.e., a coating precursor, is heated by an electrical technique or by chemical means. The electrical technique can be, without limitation, plasma or arc-based. The thermal spray technique generally employs some sort of combustion flame or plasma. The coating materials are usually fed into a spraying mechanism in powder form, heated to a molten or semi-molten state, and accelerated toward a substrate in the form of particles, e.g., micrometer-sized particles. In some preferred embodiments, the thermal spray technique is carried out at atmospheric pressure, or very close to atmospheric pressure. Further, in some embodiments, the technique is carried out at a temperature that is sufficient to melt the coating composition or its precursors, during application of the material(s) to the surface of the substrate. Usually, the thermal spray technique is a high-velocity fuel technique or a plasma spray technique. Examples of plasma spray techniques include vacuum plasma spray deposition (VPS), radio frequency plasma, plasma transfer arc, and air or atmospheric plasma spray (APS). APS techniques are preferred in some embodiments. Examples of high-velocity fuel techniques include high velocity oxy-fuel (HVOF), high velocity air fuel (HVAF), and high velocity liquid fuel (HVLF).
In some preferred embodiments, suspension spray techniques are used. The coating feedstock for such techniques is dispersed in a liquid suspension before being injected into the jet stream of a spray gun. Distilled or deionized water, alcohols such as ethanol, or water-alcohol mixtures are usually used as the solvent. A suspension technique may provide considerable advantages, such as, without limitation, easier handling and feeding of very small feedstock particles, e.g. particles having an average size in the range of about 100 nanometers to about 10 µm. In other embodiments, deposition of anode and electrolyte coatings can be achieved using vacuum plasma spray, chemical vapor deposition processes, and sputtering. In still other embodiments, the anode and electrolyte can be deposited using more traditional ceramic deposition techniques, such as tape casting, screen printing, and spin-coating using slurries, pastes or sol-gel formulations.
A number of methods can be employed to fabricate the metal interconnect and deposition substrate with interconnect junction 30. Powder metallurgical techniques followed by solid state co-sintering can provide a dense metal portion with lateral contact with a porous portion. Welding techniques, such as laser, tungsten inert gas (TIG), and metal inert gas (MIG) welding can be used to join a porous metal foam to dense sheet metal providing metal tolerances are closely controlled for intermit lateral contact. A preferred embodiment uses metallurgical melt infiltration techniques to densify and encircle the porous metal. Melt infiltration utilizes a material with a lower melting temperature than the porous metal to preferentially fill porosity in desired regions using capillary and gravity directed forces. During melt, diffusion of materials rapidly raised the melting temperature to solidify creating the interfacial porous and dense regions described herein.

Those skilled in the art can recognize low melting temperature metal alloys relative to the porous metal substrate.

Those skilled in the art will recognize that there are a variety of conductive metals that can be used for high temperature electrochemical devices such as solid oxide fuel cells. Typical designs use metals that oxidize slowly and are corrosion resistant in representative temperature and pressure operating conditions. Such material can include, without limitation, chromium-containing alloys, nickel-containing alloys, iron chromium (FeCr), nickel chromium (NiCr), or combinations thereof, including ferritic stainless steels. In some embodiments, the porous metal can be made from nickel and ferritic stainless steel such as 300 or 400-series stainless steel. The porous metal comprises nickel according to a preferred embodiment.

While the invention has been described in terms of various specific embodiments, those skilled in the art will recognize that the invention can be practiced with modification within the scope of the claims.

## Claims

1. A solid oxide fuel cell comprising an electrochemical device manifold and interconnect structure (20), comprising:
a metallic manifold (21) comprising a support surface (24) that is impervious to a fuel gas associated with a corresponding electrochemical device;
a metallic porous material (22) comprising a permeable planar surface (23) that forms a first electrode interconnect, wherein the manifold (21) is continuous and completely encircles the porous material (22) such that either a single interconnect junction (30) exists between the manifold (21) and the porous material (22) or the manifold and interconnect structure (20) comprises a plurality of tiled permeable metallic structures (42) to yield a plurality of substantially planar junctions (44) between the permeable metallic structures (42) and a dense metallic structure (46), and wherein an interconnect junction (30) between the support surface (24) and the permeable planar surface (23) comprises an exposed planar surface (38) that is substantially flat and devoid of discontinuities, corners and seams, and further wherein the support surface (24), the permeable planar surface (23) and the exposed planar surface (38) lay in a single plane common to the support surface (24), the permeable planar surface (23) and the exposed planar surface (38);
an electrode material (26) deposited onto and fully covering the exposed planar surface (38) of the interconnect junction (30), the permeable planar surface (23), and the support surface (24); and
an electrolyte (28) deposited onto the electrode material (26), wherein the electrolyte (28) substantially seals the first electrode material (26) and provides a fluid barrier between an oxidant and the fuel gas.

2. The solid oxide fuel cell according to claim 1, wherein a maximum porous opening size in the permeable surface (23) is less than 200 µm in diameter.

3. The solid oxide fuel cell according to any preceding claim, wherein a maximum porous opening size in the permeable surface (23) is less than 50 µm in diameter.

4. The solid oxide fuel cell according to any preceding claim, wherein the support surface (24) provides a seal between an oxidant and the fuel.

5. The solid oxide fuel cell according to any preceding claim, wherein the electrode material comprises a powder feedstock that is thermal spray deposited onto and fully covering the exposed planar surface (38) of the interconnect junction (30), the permeable planar surface (23), and the support surface (24) to form an anode/support surface interface.

6. The solid oxide fuel cell according to any preceding claim, wherein an average maximum electrode powder feedstock particle size is equal to or greater than 100 nm in diameter and equal to or less than 50 µm in diameter.

## Patentansprüche

1. Festoxid-Brennstoffzelle, die eine elektrochemische Vorrichtungsverteiler- und Verbindungsstruktur (20) umfasst, umfassend:
einen metallischen Verteiler (21), der eine Stützfläche (24) umfasst, die undurchdringlich für ein Brennstoffgas ist, das mit einer entsprechenden elektrochemischen Vorrichtung verbunden ist;
ein metallisches poröses Material (22), das eine durchlässige planare Fläche (23) umfasst, die eine erste Elektrodenverbindung bildet, wobei der Verteiler (21) durchgehend ist und das poröse Material (22) derart vollständig umschließt, dass entweder eine einzelne Verbindungsstelle (30) zwischen dem Verteiler (21) und dem porösen Material (22) existiert oder die Verteiler- und Verbindungsstruktur (20) mehrere gedeckte durchlässige metallische Strukturen (42) umfasst, um mehrere im Wesentlichen planare Verbindungsstellen (44) zwischen den durchlässigen metallischen Strukturen (42) und einer dichten metallischen Struktur (46) zu ergeben, und wobei eine Verbindungsstelle (30) zwischen der Stützfläche (24) und der durchlässigen planaren Fläche (23) eine frei liegende planare Fläche (38) umfasst, die im Wesentlichen eben und frei von Unterbrechungen, Ecken und Nähten ist, und wobei ferner die Stützfläche (24), die durchlässige planare Fläche (23) und die frei liegende planare Fläche (38) in einer einzigen Ebene liegen, die gemeinsam für die Stützfläche (24), die durchlässige planare Fläche (23) und die frei liegende planare Fläche (38) ist;
ein Elektrodenmaterial (26), das auf der frei liegenden planaren Fläche (38) der Verbindungsstelle (30), der durchlässigen planaren Fläche (23) und der Stützfläche (24) abgeschieden ist und dieselben vollständig bedeckt; und
einen Elektrolyten (28), der auf dem Elektrodenmaterial (26) abgeschieden ist, wobei der Elektrolyt (28) im Wesentlichen das erste Elektrodenmaterial (26) abdichtet und für eine Fluidsperre zwischen einem Oxidationsmittel und dem Brennstoffgas sorgt.

2. Festoxid-Brennstoffzelle nach Anspruch 1, wobei eine maximale Porenöffnungsgröße in der durchlässigen Fläche (23) kleiner als 200 µm im Durchmesser ist.

3. Festoxid-Brennstoffzelle nach einem der vorherigen Ansprüche, wobei eine maximale Porenöffnungsgröße in der durchlässigen Fläche (23) kleiner als 50 µm im Durchmesser ist.

4. Festoxid-Brennstoffzelle nach einem der vorherigen Ansprüche, wobei die Stützfläche (24) für eine Abdichtung zwischen einem Oxidationsmittel und dem Brennstoff sorgt.

5. Festoxid-Brennstoffzelle nach einem der vorherigen Ansprüche, wobei das Elektrodenmaterial ein Pulverausgangsmaterial umfasst, das thermisch durch Spritzabscheidung auf der frei liegenden planaren Fläche (38) der Verbindungsstelle (30), der durchlässigen planaren Fläche (23) und der Stützfläche (24) abgeschieden wird und dieselben vollständig bedeckt.

6. Festoxid-Brennstoffzelle nach einem der vorherigen Ansprüche, wobei eine durchschnittliche maximale Elektrodenpulver-Ausgangsmaterialteilchengröße größer oder gleich 100 nm im Durchmesser und kleiner oder gleich 50 µm im Durchmesser ist.

## Revendications

1. Pile à combustible à oxyde solide comprenant une structure de distribution et d'interconnexion de dispositif électrochimique (20), comprenant :
un distributeur métallique (21) comprenant une surface de support (24) qui est imperméable à un gaz combustible associé à un dispositif électrochimique correspondant ;
un matériau métallique poreux (22) comprenant une surface planaire perméable (23) qui forme une première interconnexion d'électrode, dans laquelle le distributeur (21) est continu et enserre complètement le matériau poreux (22) de sorte qu'il existe une jonction d'interconnexion unique (30) entre le distributeur (21) et le matériau poreux (22) ou que la structure de distribution et d'interconnexion (20) comprenne une pluralité de structures métalliques perméables carrelées (42) pour donner une pluralité de jonctions sensiblement planaires (44) entre les structures métalliques perméables (42) et une structure métallique dense (46), et dans laquelle une jonction d'interconnexion (30) entre la surface de support (24) et la surface planaire perméable (23) comprend une surface planaire exposée (38) qui est sensiblement plate et dépourvue de discontinuités, de coins et de jointures et en outre dans laquelle la surface de support (24), la surface planaire perméable (23) et la surface planaire exposée (38) reposent dans un seul plan commun à la surface de support (24), à la surface planaire perméable (23) et à la surface planaire exposée (38) ;
un matériau d'électrode (26) déposé sur la surface planaire exposée (38) de la jonction d'interconnexion (30), la surface planaire perméable (23) et la surface de support (24) et les recouvrant complètement ; et
un électrolyte (28) déposé sur le matériau d'électrode (26), dans laquelle l'électrolyte (28) étanche sensiblement le premier matériau d'électrode (26) et fournit une barrière aux fluides entre un oxydant et le gaz combustible.

2. Pile à combustible à oxyde solide selon la revendication 1, dans laquelle une taille d'ouverture poreuse maximale dans la surface perméable (23) est inférieure à 200 µm de diamètre.

3. Pile à combustible à oxyde solide selon l'une quelconque des revendications précédentes, dans laquelle une taille d'ouverture poreuse maximale dans la surface perméable (23) est inférieure à 50 µm de diamètre.

4. Pile à combustible à oxyde solide selon l'une quelconque des revendications précédentes, dans laquelle la surface de support (24) fournit un joint étanche entre un oxydant et le combustible.

5. Pile à combustible à oxyde solide selon l'une quelconque des revendications précédentes, dans laquelle le matériau d'électrode comprend un produit pulvérulent qui est déposé par vaporisation thermique sur la surface planaire exposée (38) de la jonction d'interconnexion (30), la surface planaire perméable (23) et la surface de support (24) et les recouvre complètement pour former une interface de surfaces anode/support.

6. Pile à combustible à oxyde solide selon l'une quelconque des revendications précédentes, dans laquelle une taille de particules de produit pulvérulent d'électrode maximale moyenne est égale ou supérieure à 100 nm de diamètre et égale ou inférieure à 50 µm de diamètre.
